# EUROPÄISCHE PATENTSCHRIFT

(11) **EP 0 584 441 B1**
(45) Veröffentlichungstag und Bekanntmachung des Hinweises auf die Patenterteilung: **09.10.1996**
(21) Anmeldenummer: 93101535.8
(22) Anmeldetag: 02.02.1993
(51) Int. Cl.: C10B 31/02, B65G 69/18

(54) **Vorrichtung zum Füllen von Kohle in die Ofenkammern einer Koksofenbatterie**
Device for filling coal into the oven chambers of a coke oven battery
Dispostif de chargement du charbon dans les chambres d'une batterie de fours à coke

(30) Priorität: 25.08.1992 DE 4228191
(43) Veröffentlichungstag der Anmeldung: 02.03.1994
(73) Patentinhaber: HARTUNG, KUHN & CO. MASCHINENFABRIK GMBH, D-45143 Essen (DE)
(72) Erfinder: Schröter, Horst, W-4069 Viersen 1 (DE); Andreas, Horst, W-4000 Düsseldorf (DE)

(56) Entgegenhaltungen:
- EP-A- 0 399 212
- EP-A- 0 454 577
- DE-A- 2 559 390
- DE-C- 3 913 320

## Beschreibung

Die Erfindung betrifft eine Vorrichtung zum Füllen von Kohle in die Ofenkammern einer Koksofenbatterie mit Hilfe eines am Füllwagen angeordneten, teleskopartig ausgebildeten Füllrohres, das mit seinem unteren Ende bis auf den Füllochrahmen der Füllöcher der Koksofenbatterie abgesenkt werden kann.

Beim Füllen der Ofenkammern von Koksofenbatterien ist es heute auf Grund der bestehenden Vorschriften für den Arbeits- und Umweltschutz unumgänglich, die dabei entstehenden staub- und teerbeladenen Gase aufzufangen und in die Vorlage der Koksofenbatterie zu leiten. Diese Gase unterliegen während des Füllvorganges unterschiedlichen Bedingungen und können bei Überdruck oder ungenügendem Abzug zur Vorlage durch die Füllochöffnungen nach außen treten. Um dies zu verhindern, ist eine einwandfreie Abdichtung zwischen dem unteren Ende des Füllrohres und dem Füllochrahmen, auf den das Füllrohr ja während des Füllvorganges aufgesetzt wird, erforderlich. In der Praxis kommt es jedoch insbesondere bei älteren Koksofenbatterien mit unebener Koksofendecke relativ häufig zu Positionierungsungenauigkeiten des Füllwagens, so daß dann die senkrechte Mittelachse des festen Auslaufstutzens des Füllwagens nicht mit der senkrechten Mittelachse des Fülloches bzw. des Füllochrahmens zusammenfällt und zwischen den beiden Mittelachsen ein mehr oder minder großer Versatz entsteht, der ein Ausmaß von einigen Zentimetern annehmen kann. Um dennoch eine einwandfreie Abdichtung zwischen dem Füllochrahmen und dem oberen Teil des Füllrohres herbeizuführen, ist es erforderlich, daß der untere Teil des Füllrohres eine dem Versatz entsprechende Schräglage einnimmt.

Zur Lösung dieses Problems ist aus der Europäischen Patentschrift 0 399 212 bereits eine Konstruktion bekannt, die eine dem Versatz entsprechende Schräglage des unteren Teiles des Füllrohres ermöglicht. Die Abdichtung zwischen dem Füllrohr und dem Füllochrahmen erfolgt dabei durch einen Dichtring, der fest am unteren Ende des Füllrohres angebracht ist. Bei einer Schräglage des unteren Teiles des Füllrohres wird deshalb der Dichtring beim Absenken des Füllrohres auch schräg in den Füllochrahmen eingesetzt. Wenn jedoch die Schräglage des unteren Teiles des Füllrohres hierbei einen gewissen Grad überschreitet, kann dies leicht zu einem unpräzisen Sitz des Dichtringes im Füllochrahmen führen. Die dadurch bedingten Undichtigkeiten sind wiederum für Emissionen verantwortlich.

Der Erfindung liegt deshalb die Aufgabe zugrunde, eine verbesserte Vorrichtung zum emissionsfreien Füllen von Kohle in die Ofenkammern einer Koksofenbatterie zu schaffen, bei der der unterste Teil des Füllrohres die durch den Versatz bedingte Schräglage einnehmen kann und gleichzeitig der Dichtring eine zuverlässige Abdichtung am Fülllochrahmen bewirkt, so daß das Auftreten von Emissionen vermieden wird.

Die der Lösung dieser Aufgabe dienende Vorrichtung der eingangs genannten Art ist erfindungsgemäß gekennzeichnet durch folgende Merkmale:
a) Das unterste Rohrstück des Füllrohres weist an der Außenseite an seinem oberen und unteren Ende Dichtringe ringe mit einem als Kugelabschnitt ausgebildeten Profil auf, wobei an dem unteren Dichtring die kreissegmentförmige Oberfläche nach oben und an dem oberen Dichtring nach unten gerichtet ist,
b) das darüber liegende Rohrstück des Füllrohres weist an der Innenseite an seinem unteren Ende ebenfalls einen Dichtring auf, dessen Oberfläche nach oben abgeschrägt ist,
c) auf dem unteren Dichtring liegt ein Kontaktring lose auf, dessen innerer Durchmesser und Profil dem äusseren Durchmesser und Profil des unteren Dichtringes angepaßt sind,
d) der Füllochrahmen-Dichtring, dessen innerer Durchmesser dem Durchmesser des unteren Rohrstückes angepaßt und dessen Profil so ausgebildet ist, daß es trichterförmig in die Füllochöffnung hineinragt und eine als Kugelabschnitt ausgebildete Dichtfläche aufweist,ist mit dem Kontaktring fest verbunden,
e) zwischen dem Füllochrahmen-Dichtring und dem Füllochrahmen sind zusätzlich elastische Dichtringe angeordnet,
   und
f) der Füllochrahmen-Dichtring ist mit einer elektrisch oder hydraulisch betriebenen Hebeeinrichtung verbunden, durch die er senkrecht auf- und abbewegt werden kann.

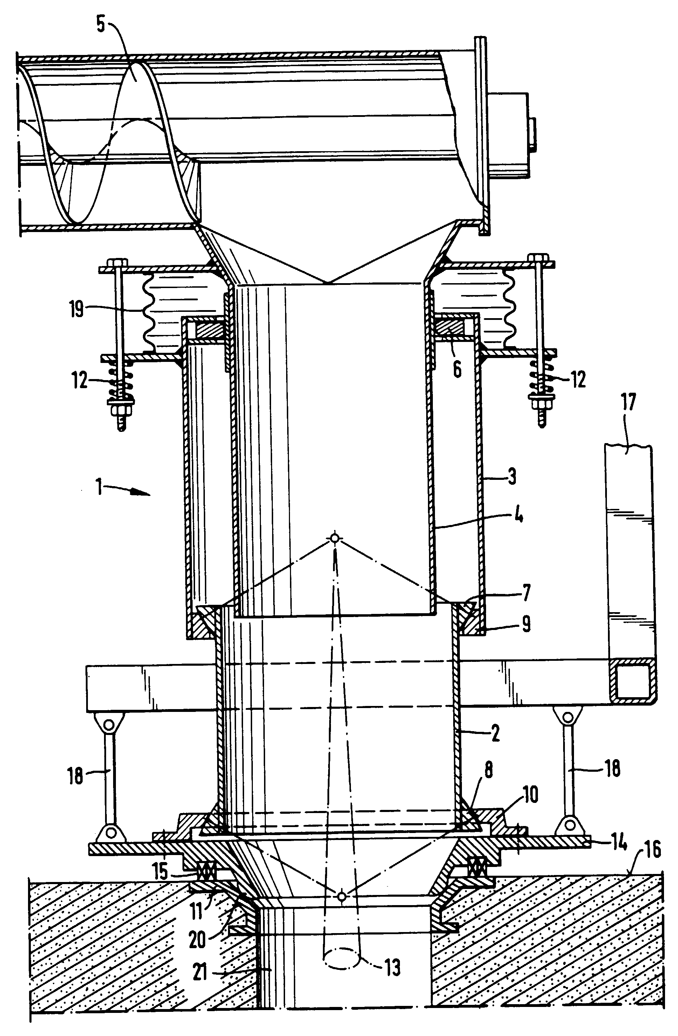

Weitere Einzelheiten der erfindungsgemäßen Vorrichtung sollen nachfolgend an Hand der Abbildung erläutert werden, die einen senkrechten Schnitt durch die Vorrichtung und den darunter liegenden Füllochrahmen zeigt.

Bei der in der Abbildung als Ausführungsbeispiel dargestellten Vorrichtung besteht das Füllrohr 1 aus einem unteren Rohrstück 2 und einem oberen, darüber liegenden Rohrstück 3. Selbstverständlich ist aber auch eine Ausführungsform möglich, bei der das Füllrohr 1 aus mehr als zwei Rohrstücken zusammengesetzt ist. Das Rohrstück 3 umgibt dabei den Auslaufstutzen 4 des in der Abbildung nicht näher dargestellten Füllwagens. Für den Transport der Kohle in den Auslaufstutzen 4 kann beispielsweise die Förderschnecke 5 verwendet werden. Gegebenenfalls ist es aber auch möglich, die Kohle mit einem Drehteller oder ausschließlich unter dem Einfluß der Schwerkraft vom Füllwagen in den Auslaufstutzen 4 zu transportieren. Am oberen Ende des Rohrstükkes 3 ist ein elastisches Dichtelement 6 angeordnet, das den Auslaufstutzen 4 umgibt und mit dem Rohrstück 3 verschiebbar ist. Eine besonders geeignete Ausführungsform dieses Dichtelementes wird beispielsweise in der DE-PS 39 13 320 beschrieben. Erfindungsgemäß weist das untere Rohrstück 2 an der Außenseite an seinem oberen und unteren Ende Dichtringe 7 und 8 auf, die ein als Kugelabschnitt ausgebildetes Profil besitzen. In dem in der Abbildung dargestellten Ausführungsbeispiel zeigt das Profil jeweils die Form einer Viertelkugel. Das Profil kann aber auch die Form eines anderen Kugelabschnittes besitzen. Bei dem unteren Dichtring 8 ist dabei die kreissegmentförmige Oberfläche nach oben und bei dem oberen Dichtring 7 ist sie nach unten gerichtet. An der Innenseite des darüber liegenden Rohrstückes 3 ist am unteren Ende ebenfalls ein Dichtring 9 angeordnet, dessen Oberfläche nach oben abgeschrägt ist. Die Dichtringe bestehen hierbei aus Stahl. Auf dem Dichtring 8 liegt der Kontaktring 10 lose auf, dessen innerer Durchmesser dem äußeren Durchmesser des Dichtringes 8 angepaßt ist, wobei die Formgebung und die Maße des Kontaktringes 10 so gewählt werden, daß dieser auf der kreissegmentförmigen Oberfläche des Dichtringes 8 gleiten kann. Durch das Zusammenwirken der Dichtringe 7 und 9 sowie das Gleiten des Kontaktringes 10 auf der Oberfläche des Dichtringes 8 kann das Rohrstück 2 eine Schrägstellung einnehmen, ohne daß der Kontaktring 10 seine waagerechte Position verändert. Die mögliche Schrägstellung des Rohrstückes 2 wird in der Abbildung durch den Kegel 13 markiert. Der Kontaktring 10 ist mit dem darunter liegenden Füllochrahmen-Dichtring 14 fest verbunden, der seinerseits im abgesenkten Zustande des Rohrstückes 2 auf dem in die Ofendecke 16 eingelassenen Füllochrahmen 11 lose aufliegt. Wie aus der Abbildung zu erkennen ist, weist der Füllochrahmen-Dichtring 14 einen inneren Durchmesser auf, der dem Durchmesser des Rohrstückes 2 angepaßt ist, so daß der Füllochrahmen-Dichtring 14 bei einer Aufwärtsbewegung auf das Rohrstück 2 und den mit ihm verbundenen Dichtring 8 eine nach oben gerichtete Kraft ausüben kann. Zu diesem Zweck ist der Füllochrahmen-Dichtring 14 im vorliegenden Ausführungsbeispiel über die Gelenkstangen 18 und den Hebebalken 17 mit einer in der Abbildung nicht dargestellten, elektrisch oder hydraulisch betriebenen Hebeeinrichtung verbunden. Dadurch kann der Füllochrahmen-Dichtring 14 senkrecht auf- und abbewegt werden. Im Falle der Abwärtsbewegung wird das Rohrstück 2 durch die über den mit dem Füllochrahmen-Dichtring 14 fest verbundenen Kontaktring 10 auf den Dichtring 8 einwirkende Kraft nach unten gedrückt. Der Füllochrahmen-Dichtring 14 behält dabei auch bei einer Schräglage des Rohrstückes 2 stets seine waagerechte Position. Durch die erfindungsgemäße Ausführungsform des Füllochrahmen-Dichtringes 14, der trichterförmig in die Füllochöffnung 21 hineinragt und eine als Kugelabschnitt ausgebildete Dichtfläche 20 aufweist, ist sowohl ein einwandfreies Einführen dieses Dichtringes in den Füllochrahmen 11 als auch eine einwandfreie Abdichtung zwischen dem Rohrstück 2 und dem Fülllochrahmen 11 gewährleistet. Zur Verbesserung der Abdichtung sind zusätzlich die elastischen Dichtringe 15 vorgesehen, die entweder aus Asbestersatzwerkstoffen oder anderen temperaturbeständigen Materialien mit einer Keramik- oder Glasfasereinlage bestehen. Der FüllochrahmenDichtring 14 besteht aus Stahl oder einem anderen Gußwerkstoff. In der Abbildung ist das Füllrohr 1 im abgesenkten Zustand dargestellt. Damit die notwendige Abdichtung zwischen den Rohrstücken 2 und 3 sowie zwischen dem Rohrstück 2 und dem Füllochrahmen 11 gewährleistet ist, muß auf das Rohrstück 2 eine nach unten gerichtete Kraft und auf das Rohrstück 3 eine nach oben gerichtete Kraft einwirken. Die nach unten gerichtete Krafteinwirkung auf das Rohrstück 2 erfolgt durch die Hebeeinrichtung, wobei diese Kraft durch die Gelenkstangen 18 übertragen wird. Die nach oben gerichtete Krafteinwirkung auf das Rohrstück 3 erfolgt über die Schraubfedern 12. Oberhalb der Schraubfedern 12 ist noch eine flexible Abdichtung 19 vorgesehen, die eine zusätzliche Abdichtung zwischen dem Rohrstück 3 und dem Auslaufstutzen 4 bewirkt. Die feste Verbindung zwischen dem Kontaktring 10 und dem Füllochrahmen-Dichtring 14 kann in geeigneter Weise, z.B. durch Verschrauben, hergestellt werden.

Durch die Anwendung der erfindungsgemäßen Vorrichtung wird das der Erfindung zugrunde liegende Problem in vollauf befriedigender Weise gelöst, wobei die Bewegung des Rohrstückes 2 der Bewegung einer Gelenkwelle entspricht.

## Patentansprüche

1. Vorrichtung zum Füllen von Kohle in die Ofenkammern einer Koksofenbatterie mit Hilfe eines am Füllwagen angeordneten, teleskopartig ausgebildeten Füllrohres, das mit seinem unteren Ende bis auf den Füllochrahmen der Füllöcher der Koksofenbatterie abgesenkt werden kann, **gekennzeichnet durch** folgende Merkmale:
a) Das unterste Rohrstück (2) des Füllrohres (1) weist an der Außenseite an seinem oberen und unteren Ende Dichtringe (7; 8) mit einem als Kugelabschnitt ausgebildeten Profil auf, wobei an dem unteren Dichtring (8) die kreissegmentförmige Oberfläche nach oben und an dem oberen Dichtring (7) nach unten gerichtet ist,
b) das darüber liegende Rohrstück (3) des Füllrohres (1) weist an der Innenseite an seinem unteren Ende ebenfalls einen Dichtring (9) auf, dessen Oberfläche nach oben abgeschrägt ist,
c) auf dem unteren Dichtring (8) liegt ein Kontaktring (10) lose auf, dessen innerer Durchmesser und Profil dem äußeren Durchmesser und Profil des unteren Dichtringes (8) angepaßt sind,
d) der Füllochrahmen-Dichtring (14), dessen innerer Durchmesser dem Durchmesser des Rohrstückes (2) angepaßt und dessen Profil so ausgebildet ist, daß es trichterförmig in die Füllochöffnung (21) hineinragt und eine als Kugelabschnitt ausgebildete Dichtfläche (20) aufweist,ist mit dem Kontaktring (10) fest verbunden,
e) zwischen dem Füllochrahmen-Dichtring (14) und dem Füllochrahmen (11) sind zusätzlich elastische Dichtringe (15) angeordnet.
und
f) der Füllochrahmen-Dichtring (14) ist mit einer elektrisch oder hydraulisch betriebenen Hebeeinrichtung verbunden, durch die er senkrecht auf- und abbewegt werden kann.

2. Vorrichtung nach Anspruch 1, **dadurch gekennzeichnet**, daß der Füllochrahmen-Dichtring (14) über die Gelenkstangen (18) und einen Hebebalken (17) mit der Hebeeinrichtung in Verbindung steht.

3. Vorrichtung nach den Ansprüchen 1 und 2, **dadurch gekennzeichnet**, daß im abgesenkten Zustand des Füllrohres (1) auf das Rohrstück (2) eine nach unten gerichtete Kraft und auf das Rohrstück (3) eine nach oben gerichtete Kraft einwirkt.

4. Vorrichtung nach den Ansprüchen 1 bis 3, **dadurch gekennzeichnet**, daß die elastischen Dichtringe (15) aus Asbestersatzwerkstoffen oder anderen temperaturbeständigen Materialien mit einer Keramik- oder Glasfasereinlage bestehen.

## Claims

1. Apparatus for charging coal into the oven chambers of a coke oven battery by means of a telescopically designed charging pipe which is arranged on the charging car and which can be lowered with its bottom end onto the charging-hole frame of the charging holes of the coke oven battery, characterized by the following features:
a) the bottommost pipe section (2) of the charging pipe (1) has on the outside, at its top and bottom end, sealing rings (7; 8) with a profile designed as a spherical segment, the surface in the form of a circular segment being directed upwards on the lower sealing ring (8) and being directed downwards on the upper sealing ring (7),
b) that pipe section (3) of the charging pipe (1) located above it likewise has on the inside, at its bottom end, a sealing ring (9), the surface of which is slanted upwards,
c) a contact ring (10) rests loosely on the lower sealing ring (8), the inside diameter and profile of the said contact ring being matched to the outside diameter and profile of the lower sealing ring (8),
d) the charging-hole frame sealing ring (14), the inside diameter of which is matched to the diameter of the pipe section (2) and the profile of which is designed in such a way that it projects in a funnel-shaped manner into the charging-hole orifice (21) and has a sealing face (20) designed as a spherical segment, is fixedly connected to the contact ring (10),
e) elastic sealing rings (15) are additionally arranged between the charging-hole frame sealing ring (14) and the charging-hole frame (11),
and
f) the charging-hole frame sealing ring (14) is connected to an electrically or hydraulically operated lifting appliance, by means of which it can be moved up and down vertically.

2. Apparatus according to Claim 1, characterized in that the charging-hole frame sealing ring (14) is connected to the lifting appliance via the articulated rods (18) and a lifting beam (17).

3. Apparatus according to Claims 1 and 2, characterized in that, when the charging pipe (1) is in the lowered state, a downwardly directed force acts on the pipe section (2) and an upwardly directed force acts on the pipe section (3).

4. Apparatus according to Claims 1 to 3, characterized in that the elastic sealing rings (15) consist of asbestos substitute materials or other heat-resistant materials having a ceramic or glass-fibre interlining.

## Revendications

1. Dispositif de chargement de charbon dans les chambres d'une batterie de fours à coke à l'aide d'un tube de chargement télescopique disposé sur le chariot de chargement, qui peut être abaissé par son extrémité inférieure jusqu'au cadre des orifices de chargement de la batterie de fours à coke, caractérisé par les particularités suivantes :
a) la partie tubulaire inférieure (2) du tube de chargement (1) présente du côté extérieur, à ses extrémités supérieure et inférieure, des anneaux d'étanchéité (7; 8) ayant un profil de segment sphérique, la surface en forme de segment sphérique étant dirigée vers le haut sur l'anneau d'étanchéité inférieur (8) et vers le bas sur l'anneau d'étanchéité supérieur (7),
b) la partie tubulaire (3) du tube de chargement (1) placée au-dessus présente également, du côté intérieur, à son extrémité inférieure, un anneau d'étanchéité (9), dont la surface est inclinée vers le haut,
c) sur l'anneau d'étanchéité inférieur (8) repose librement un anneau de contact (10), dont le diamètre et le profil intérieurs sont adaptés au diamètre et au profil extérieurs de l'anneau d'étanchéité inférieur (8),
d) l'anneau d'étanchéité (14) du cadre des orifices de chargement, dont le diamètre intérieur est adapté au diamètre de la partie tubulaire (2) et dont le profil est dessiné de façon à pénétrer comme un entonnoir dans l'ouverture (21) de l'orifice de chargement et à présenter une face d'étanchéité (20) en forme de segment sphérique, est fixement assemblé à l'anneau de contact (10),
e) des anneaux d'étanchéité élastiques supplémentaires (15) sont disposés entre l'anneau d'étanchéité (14) du cadre de l'orifice de chargement et le cadre (11) de l'orifice de chargement, et
f) l'anneau d'étanchéité (14) du cadre de l'orifice de chargement est relié à un dispositif de levage à commande électrique ou hydraulique, par lequel il peut être soulevé ou abaissé verticalement.

2. Dispositif selon la revendication 1, caractérisé en ce que l'anneau d'étanchéité (14) du cadre de l'orifice de chargement est relié au dispositif de levage par l'intermédiaire des bielles (18) et d'une poutre de levage (17).

3. Dispositif selon les revendications 1 et 2, caractérisé en ce qu'en position abaissée du tube de chargement (1), une force dirigée vers le bas agit sur la partie tubulaire (2) et une force dirigée vers le haut agit sur la partie tubulaire (3).

4. Dispositif selon les revendications 1 à 3, caractérisé en ce que les anneaux d'étanchéité élastiques (15) sont constitués de matières de remplacement de l'amiante ou d'autres matières résistant à la température avec une couche en fibres céramiques ou en fibres de verre.
